# EUROPÄISCHE PATENTSCHRIFT

(11) **EP 2 679 336 B1**
(45) Veröffentlichungstag und Bekanntmachung des Hinweises auf die Patenterteilung: **13.11.2019**
(21) Anmeldenummer: 13173021.0
(22) Anmeldetag: 20.06.2013
(51) Int. Cl.: B23P 19/06, B25B 29/02, F16B 31/02, F16B 31/04, G01L 5/24, B25B 23/14

(54) **Spannvorrichtung zum Dehnen eines Gewindebolzens**
Tensioning device for extending a threaded bolt
Dispositif de serrage pour l'étirement d'un boulon fileté

(30) Priorität: 28.06.2012 DE 102012105654
(43) Veröffentlichungstag der Anmeldung: 01.01.2014
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Bungartz Christophersen Partnerschaft mbB Patentanwälte

(56) Entgegenhaltungen:
- WO-A1-2010/054959
- DE-A1- 4 313 778
- JP-A- S6 459 197
- JP-A- H03 204 406
- US-A- 5 249 208
- US-A1- 2009 173 161

## Beschreibung

Die Erfindung betrifft eine Spannvorrichtung zum Dehnen eines Gewindebolzens durch Zug an dessen Gewindeendabschnitt nach dem Oberbegriff des Patentanspruchs 1.

Eine hydraulisch arbeitende Bolzenspannvorrichtung mit den Merkmalen des Oberbegriffs ist aus der JP H03 204406 A bekannt. Die Spannvorrichtung ist mit einem innerhalb eines Zylinders axial bewegbaren Kolben, einer mit dem Gewindeendabschnitt des zu dehnenden Gewindebolzens verschraubbaren, durch den Kolben axial mitnehmbar ausgebildeten Wechselbuchse, und mit einer Stiftanordnung versehen, wobei die Stiftanordnung mit einem erweiterten Bund gegen die freie Stirnfläche des Gewindebolzens axial abstützbar ist. Die Stiftanordnung dient dazu, mittels einer Sensorik die Dehnung des Gewindebolzens zu erfassen.

Eine weitere, ähnlich aufgebaute Bolzenspannvorrichtung ist aus der DE 43 13 778 A1 bekannt. Auch hier dient eine Anordnung aus mehreren Stiftabschnitten, die sich teils innerhalb des zu dehnenden Gewindebolzens befinden, der Detektierung der Dehnung des Gewindebolzens.

Eine weitere hydraulisch arbeitende Bolzenspannvorrichtung mit diesen Merkmalen ist aus der WO 2010/054959 A1 bekannt. Die Spannvorrichtung weist Maßnahmen zur Kontrolle des Gewindeüberstandes auf, d. h. der Länge des von der Wechselbuchse erfassten Gewindeendabschnitts des Gewindebolzens. Zu diesem Zweck ist die Wechselbuchse mit einem Längskanal versehen, in dem längsverschieblich ein Messstab sitzt. Dieser stützt sich mit seinem unteren Ende auf der Stirnfläche des zu spannenden Gewindebolzens axial ab. An seinem anderen Ende ist der Messstab mit farbigen Markierungen versehen, anhand derer sich gegenüber der Wechselbuchse ablesen lässt, ob der Gewindeüberstand, also die Länge des von der Wechselbuchse erfassten Gewindeabschnitts, für den Spannprozess ausreichend groß ist. Der Messstab nach der WO 2010/054959 A1 ermöglicht zwar in vielen Fällen eine ausreichend genaue Beurteilung, allerdings wird die Beurteilung des tatsächlich genutzten Gewindeüberstandes in solchen Fällen ungenau, in denen die Stirnfläche des Bolzens nicht geschlossen ist, sondern z. B. eine zentrale Gewindeeinsenkung aufweist, in der sich dann das untere Ende des Stabs abstützt.

Der Erfindung liegt die Aufgabe zugrunde, eine Beurteilung des tatsächlichen Gewindeeingriffs auch in solchen Fällen zu ermöglichen, in denen die bekannte Spannvorrichtung ungenaue Ergebnisse liefert.

Zur Lösung dieser Aufgabe wird eine Spannvorrichtung zum Dehnen eines Gewindebolzens durch Zug an dessen Gewindeendabschnitt mit den Merkmalen des Patentanspruchs 1 vorgeschlagen.

Vorteilhafte Ausführungsformen der Erfindung sind den Unteransprüchen zu entnehmen .

Mit der radialen Erweiterung am unteren Stiftende wird erreicht, dass der Kontakt des Stifts mit dem zu spannenden Bolzen stets in einer einheitlichen Ebene erfolgt, nämlich in der Ebene der Stirnfläche des Bolzens und damit in jener Ebene, bis zu der üblicherweise das für den Spannprozess zur Verfügung stehende Außengewinde des Bolzens reicht. Diese Maßnahme ermöglicht eine Beurteilung der tatsächlichen Länge des Gewindeeingriffs auch in solchen Fällen, in denen es ansonsten zu ungenauen Auswerteergebnissen kommen würde, etwa weil der Bolzen eine zentrale Gewindeeinsenkung aufweist und sich der Stift mit seinem unteren Ende in dieser, und nicht an der eigentlichen Stirnfläche des Gewindebolzens abstützt.

Gemäß verschiedener möglicher Ausgestaltungen der Spannvorrichtung kann die radiale Erweiterung z. B. als eine fest oder lösbar am Stiftende angeordnete Scheibe mit zu dem Gewindebolzen hin flacher oder hohl gewölbter Unterseite ausgebildet sein. Oder die radiale Erweiterung kann als eine fest oder lösbar am Stiftende angeordnete Buchse ausgebildet sein, die zu dem Gewindebolzen hin mit einer Aussparung versehen ist. Die Aussparung in der Buchse oder der Scheibe bietet Platz für ein sensorisch arbeitendes Identifizierungselement, mit dem sich Merkmale oder Kennzeichen des zu spannenden Gewindebolzens zwecks Kontrolle, Auswertung oder Dokumentation erfassen lassen.

Mit einer weiteren Ausgestaltung wird vorgeschlagen, dass die Erweiterung gegenüberliegend zu der Stirnfläche des Gewindebolzens angeordnet, und mit einem sensorisch arbeitenden, mindestens ein an der Stirnfläche ausgebildetes Merkmal erfassenden Identifizierungselement versehen ist.

Vorzugsweise ist ein Signalkabel des Identifizierungselements entlang der Längsführung des Stabs bis zu einem Anschluss im Zylinder geführt, wobei der Anschluss eine Signalverbindung zu einer Auswerteeinheit herstellt. Zum Beispiel kann das Signalkabel in einem in dem Stab ausgebildeten Längskanal angeordnet und so platzsparend zu dem Anschluss geführt sein.

Eine weitere Ausgestaltung der Spannvorrichtung ist gekennzeichnet durch im Bereich des der Erweiterung abgewandten anderen Endes des Stabes angeordnete Mittel zum Erfassen der Längsposition des Stabes.

Eine weitere Ausgestaltung der Spannvorrichtung ist dadurch gekennzeichnet, dass am anderen Ende des Stifts außerhalb des Zylinders innerhalb oder außerhalb der Wechselbuchse die axiale Vertikalbewegung des Stifts induktiv oder mit optischen Mitteln ausgewertet und zur Anzeige gebracht wird.

Weitere Einzelheiten und Vorteile ergeben sich aus der nachfolgenden Beschreibung eines auf der Zeichnung dargestellten Ausführungsbeispiels. Es zeigen:
- Fig. 1: einen Längsschnitt durch eine hydraulisch arbeitende Gewindebolzenspannvorrichtung, aufgesetzt auf einen durch eine Mutter gesicherten Gewindebolzen;
- Fig. 2: die in Fig. 1 mit II bezeichnete Einzelheit in vergrößertem Maßstab, wobei das Ende des Gewindebolzens geschnitten dargestellt ist;
- Fig. 3: die in Fig. 1 mit III bezeichnete Einzelheit in vergrößertem Maßstab und
- Fig. 4: eine Draufsicht auf die Gewindebolzenspannvorrichtung.

Die hydraulisch betriebene Spannvorrichtung dient dem Anziehen und gegebenenfalls auch dem Lösen hoch belasteter Schraubverbindungen. Die Spannvorrichtung hat die Aufgabe, in Bolzenlängsrichtung für eine gewisse Zeit eine vorgegebene Vorspannkraft auf den Gewindebolzen 3 aufzubringen, um die Möglichkeit zu schaffen, momentenfrei die auf den Gewindebolzen 3 aufgeschraubte Mutter 4 der Schraubverbindung anzuziehen bzw. nachzuziehen. Zu diesem Zweck wird eine Wechselbuchse der im folgenden näher beschriebenen Spannvorrichtung auf das über die Mutter 4 hinaus vorstehende Gewinde des Gewindebolzens 3 aufgeschraubt und anschließend unter hydraulischen Zug gesetzt, wodurch sich der Gewindebolzen 3 in Längsrichtung dehnt.

Die Einschraubtiefe des Gewindebolzens ist begrenzt durch die Länge des Gewindeabschnitts A, die oberhalb der Mutter 4 als Bolzenüberstand zur Verfügung steht. Die zur Verfügung gestellte Einschraubtiefe sollte mindestens gleich dem Gewindedurchmesser des Bolzens sein, vorzugsweise das 1,5 fache. Nur durch die Mindesteinschraubtiefe ist sichergestellt, dass der Gewindebolzen 3 nicht durch den Spannprozess beschädigt wird. Wird ein Mindestwert für die Länge A1 des Gewindeeingriffs nicht eingehalten, kann es zu einem Abreißen des Gewindebolzenendes kommen.

Die Bolzenspannvorrichtung weist ein Gehäuse aus einem oder mehreren Zylindern 1 besteht. Die Fortsetzung des Gehäuses bzw. der Zylinder 1 nach unten hin bildet ein Stützrohr 2, welches an seiner Unterseite offen ist und sich auf jener Unterlage, zumeist einem Maschinenteil, abstützt, auf der sich auch die Mutter 4 abstützt. Seitlich an dem aus den Zylindern 1 zusammengesetzten Gehäuse befindet sich ein Hydraulikanschluss 7. Außerdem kann ein durch Öffnungen 8 in dem Stützrohr 2 hindurch arbeitendes Getriebe vorgesehen sein, mit dem sich die auf den Gewindebolzen 3 geschraubte Mutter 4 drehen lässt. Dieses Drehen ist natürlich nur möglich, wenn die Spannvorrichtung arbeitet, und daher die Mutter 4 nicht durch erhebliche Reibung belastet ist.

Beim Ausführungsbeispiel enthält das Gehäuse mehrere, hier zwei parallel geschaltete Hydraulikzylinder, die jeweils mit dem Hydraulikanschluss 7 verbunden sind. In jedem der Zylinder 1 ist längsbeweglich ein Kolben 5 angeordnet. Bei dem Ausführungsbeispiel sind dies also ein unterer Kolben 5 sowie ein oberer Kolben 5, die gemeinsam beweglich sind. Durch Einspeisen von hyraulischem Druck in die Arbeitsräume der Zylinder werden die Kolben 5 angehoben. Dies kann entgegen der Wirkung einer sich auf dem obersten Kolben 5 abstützenden Druckfeder erfolgen.

Die Kolben 5 sind starr mit einer in ihnen zentral angeordneten Wechselbuchse 10 verbunden. Die Bewegung der Kolben 5 führt also zu einer identischen Bewegung der Wechselbuchse 10. Diese ist mittels geeigneter Maßnahmen austauschbar gestaltet, sie lässt sich also gegen eine Wechselbuchse 10 anderer Geometrie austauschen, wohingegen der Kolben 5 bzw. die Kolben 5 nicht gegen andere Kolben ausgetauscht werden.

Die Wechselbuchse 10 setzt sich einstückig aus einem unteren Kopplungsabschnitt und einem oberen Schaftabschnitt zusammen. Der Kopplungsabschnitt befindet sich innerhalb des Stützrohres 2 und weist ein Innengewinde auf, welches mit dem Außengewinde des Gewindebolzens 3 verschraubbar ist. Der Schaftabschnitt der Wechselbuchse 10 ist umgeben von den Kolben 5, mit denen er, vorzugsweise durch eine Verschraubung, starr verbunden ist.

Zum Spannen des Gewindebolzens wird die Wechselbuchse 10 auf den Gewindeendabschnitt A des Gewindebolzens aufgeschraubt. Durch Einspeisen von hydraulischem Druck heben die Kolben 5 unter Mitnahme der Wechselbuchse 10 an, wodurch es zu einer Längsdehnung des Gewindebolzens 3 kommt. Damit verbunden ist ein Reibungsverlust der Unterseite der Mutter 4, so dass diese sich auf dem Gewinde des Bolzens drehen, d. h. nachziehen lässt.

Für den Spannvorgang wichtig ist, dass die durch die Länge des Gewindeendabschnitts A zur Verfügung stehende Einschraubtiefe des Gewindebolzens 3 mit dem korrespondierenden Innengewinde der Wechselbuchse 10 ausgenutzt wird. Zur Kontrolle der Einschraubtiefe befindet sich zentral in einer Längsbohrung der Wechselbuchse 10 ein Stift 20.

Der Stift 20 ist mit einem Bund oder einer Erweiterung 21 versehen, gegen den bzw. die sich eine andererseits gegenüber der Wechselbuchse 10 abgestützte Feder 21A abstützt. Auf diese Weise ist der in der Längsführung 17 längsbewegliche Stift 20 stets durch eine Kraft beaufschlagt, die ihn leicht nach unten, d. h. zu dem Gewindebolzen 3 hin, beaufschlagt.

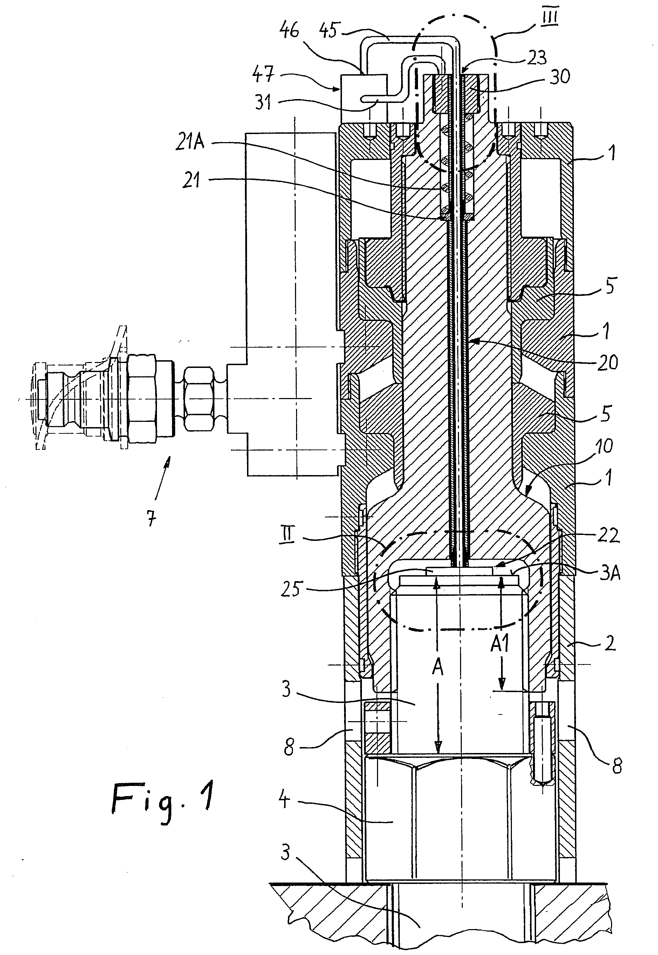

Der Stift 20 stützt sich an seinem unteren Ende 22 axial gegen die Stirnfläche 3A des Gewindebolzens 3 ab. Das andere Ende 23 des Stifts 20 befindet sich im Bereich des oberen Teils der Spannvorrichtung. Dort sind technische Maßnahmen getroffen, die Längsposition des Stiftendes 23 zu erfassen. Aus dieser Längsposition ist ableitbar, in welcher Höhe sich das untere Stiftende 22 befindet, was einen direkten Rückschluss auf die Länge des Gewindeeingriffs A1 am Gewindeendabschnitt A ermöglicht. Denn wäre bei der Situation nach Fig. 1 die Länge A1 des Gewindeeingriffs geringer als dargestellt, wäre auch der Stift 20 weiter abgesenkt, was aus der Position des oberen Stiftendes 23 detektierbar wäre.

Zur Detektion der Höhenposition des Stifts 20 sind im Bereich des Stiftendes 23 Mittel 30 zum Erfassen der Längsposition des Stifts angeordnet. Diese Mittel 30 sind ausgebildet, die Vertikalbewegung des Stifts 20 z. B. induktiv oder mit optischen Mitteln zu erfassen. Die Positionssignale gelangen über eine Signalleitung 31 zu einer Auswerteeinheit 47.

Die Auswerteeinheit 47 ist beim Ausführungsbeispiel oben am Gehäuse der Spannvorrichtung angeordnet, jedoch ist auch eine Anordnung an anderer Stelle möglich.

An seinem unteren Stiftende 22 ist der Stift 20 im Vergleich zum übrigen Stiftquerschnitt radial erweitert. Zu diesem Zweck ist das untere Stiftende als eine Scheibe 25 gestaltet, deren radiale Weite größer als der übrige Querschnitt des Stifts 20 ist. Die so gebildete Erweiterung 25 sollte nicht größer sein als die Größe der Stirnfläche 3A des Gewindebolzens.

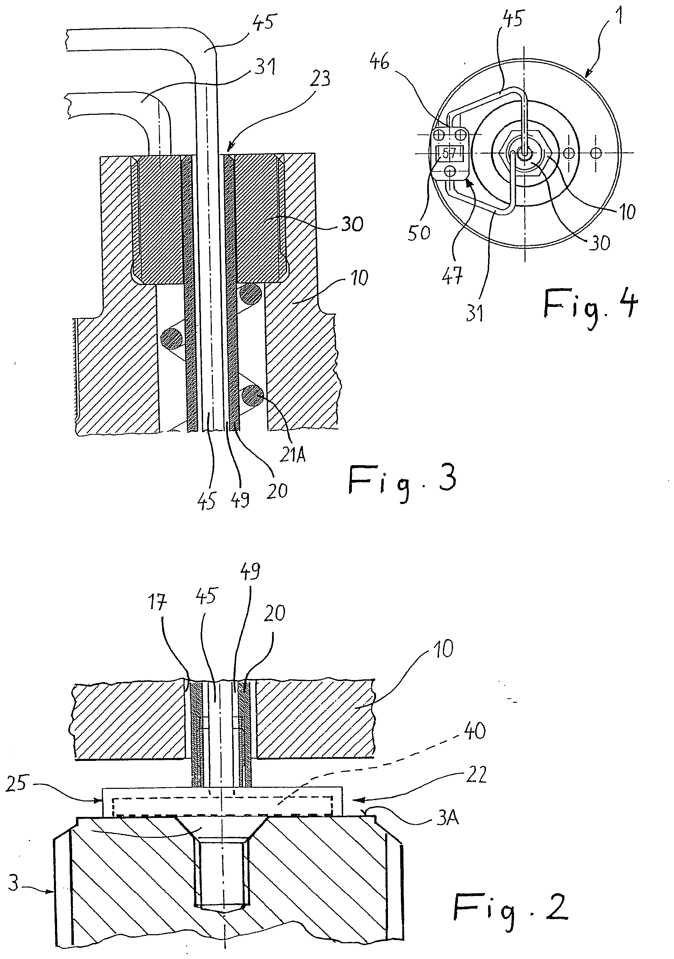

In Fig. 2 sind Einzelheiten des unteren Stiftendes 22 und der dieses Stiftende bildenden Erweiterung 25 wiedergegeben. Die Erweiterung bzw. Scheibe kann einstückiger Bestandteil des Stifts 20 sein, oder ein Element, welches fest an dem Stift 20 befestigt ist. Die radiale Erweiterung 25 führt dazu, dass der Kontakt des Stifts mit dem zu spannenden Bolzen 3 stets in einer einheitlichen Ebene erfolgt, nämlich in der Ebene der Stirnfläche 3A des Bolzens.

Die Erweiterung 25 ermöglicht eine Beurteilung der Länge A1 des tatsächlich in Eingriff stehenden Gewindeüberstandes auch in solchen Fällen, in denen es ansonsten zu ungenauen Auswerteergebnissen kommen würde, etwa weil der Gewindebolzen 3 mit einer zentralen Gewindeeinsenkung 3B versehen ist. Denn würde der Stift 20 unten schlank enden, so würde er sich in der Gewindeeinsenkung 3B, und nicht an jener Stirnfläche 3A des Gewindebolzens 3 abstützen, bis zu deren Höhe häufig das Gewinde des Gewindebolzens 3 reicht. Von daher sollte die radiale Weite der Erweiterung 25 mindestens die Größe der Einsenkung 3B betragen.

Gemäß Fig. 2 befindet sich in der die Erweiterung 25 bildenden Scheibe, gegenüberliegend zu der Stirnfläche 3A des Gewindebolzens 3, ein Identifizierungselement 40. Zu dessen Unterbringung kann die Erweiterung 25 mit einer entsprechend bemessenen Ausnehmung versehen sein.

Das Identifizierungselement 40 ist dazu ausgebildet, mindestens ein an der Stirnfläche 3A des Gewindebolzens ausgebildetes oder angeordnetes Merkmal zu erfassen. Dieses Merkmal kann eine Kennzeichnung des Bolzens oder der Verschraubung sein, z. B. ein Barcode, oder die Güteklasse des Werkstoffs, aus dem der Gewindebolzen besteht. Aber auch andere Kennzeichnungen, die sich im Bereich der Stirnfläche 3A befinden, können durch das Identifizierungselement 40 detektierbar sein.

Das Sensorsignal des Identifizierungselements 40 gelangt über ein Signalkabel 45 zu einem Anschluss 46, und von dort zu einer Auswerteeinheit 47. Bei dem wiedergegebenen Ausführungsbeispiel ist dies dieselbe mit einem Anzeigeelement 50 versehene Auswerteeinheit 47, zu der auch die Signalleitung 31 des Mittels 30 zum Erfassen der Längsposition des Stifts 20 führt.

Zur Aufnahme des Signalkabels 45 ist der Stift 20, welcher selbst in der Längsführung 17 der Wechselbuchse 10 axial geführt ist, mit einem vorzugsweise auf der Stiftachse angeordneten Längskanal 49 versehen. Das vom Identifizierungselement 40 kommende Signalkabel 45 ist auf diese Weise längs des Stifts 20 geführt, und tritt am oberen Stiftende 23 aus dem Stift aus, und führt von dort über einen weiteren Kabelabschnitt bis zu dem Anschluss 46 an der Auswerteeinheit 47.

In der Auswerteeinheit 47 werden die von dem Identifizierungselement 40 kommenden Signale in geeigneter Weise ausgewertet und gegebenenfalls weiter verarbeitet. Die Signale können mittels des Anzeigeelements 50 angezeigt werden, oder sie werden an eine Steuereinheit übertragen, die Bestandteil der Hydrauliksteuerung der Spannvorrichtung ist. In der Auswerte- oder der Steuereinheit kann ferner eine elektronische Dokumentation der durch das Identifizierungselement 40 erfassten Daten als Teil der Dokumentation des Spannprozesses erfolgen.

### Bezugszeichenliste

- 1: Zylinder
- 2: Stützrohr
- 3: Gewindebolzen
- 3A: Stirnfläche Gewindebolzen
- 3B: Einsenkung
- 4: Mutter
- 5: Kolben
- 7: Hydraulikanschluss
- 8: Öffnung
- 10: Wechselbuchse
- 17: Längsführung
- 20: Stift
- 21: Erweiterung
- 21A: Feder
- 22: Stiftende
- 23: Stiftende
- 25: Erweiterung, Scheibe
- 30: Mittel zum Erfassen der Längsposition
- 31: Signalleitung
- 40: Identifizierungselement
- 45: Signalkabel
- 46: Anschluss
- 47: Auswerteeinheit
- 49: Längskanal
- 50: Anzeigeelement

- A: Gewindeendabschnitt
- A1: Länge Gewindeeingriff

## Patentansprüche

1. Spannvorrichtung zum Dehnen eines Gewindebolzens durch Zug an dessen Gewindeendabschnitt (A), mit einem den Gewindeendabschnitt (A) umgebenden Stützrohr (2), einem in Verlängerung des Stützrohrs (2) angeordneten Zylinder (1) mit mindestens einem darin axial bewegbaren Kolben (5), einer mit dem Gewindeendabschnitt (A) verschraubbaren, durch den Kolben (5) axial mitnehmbar ausgebildeten Wechselbuchse (10), und einem Stift (20), der gegen die Stirnfläche (3A) des den Gewindeendabschnitt (A) aufweisenden Endes des Gewindebolzens axial abstützbar ist, **dadurch gekennzeichnet, dass** der Stift (20) in einer Längsführung (17) in der Wechselbuchse (10) axial beweglich angeordnet ist, dass der Stift (20) mit seinem Stiftende (22) gegen die Stirnfläche (3A) axial abstützbar ist, und dass der Stift (20) an seinem Stiftende (22) im Vergleich zum übrigen Stiftquerschnitt radial erweitert ausgebildet ist.

2. Spannvorrichtung nach Anspruch 1, **dadurch gekennzeichnet, dass** die radiale Erweiterung (25) als eine fest oder lösbar am Stiftende (22) angeordnete Scheibe ausgebildet ist.

3. Spannvorrichtung nach Anspruch 2, **dadurch gekennzeichnet, dass** die Scheibe (25) zu dem Gewindebolzen hin mit einer flachen oder hohl gewölbten Unterseite versehen ist.

4. Spannvorrichtung nach Anspruch 1, **dadurch gekennzeichnet, dass** die radiale Erweiterung (25) als eine zu dem Gewindebolzen hin mit einer Aussparung versehene Buchse ausgebildet ist.

5. Spannvorrichtung nach einem der Ansprüche 1 bis 4, **dadurch gekennzeichnet, dass** die Scheibe bzw. Buchse sich über eine Fläche erstreckt, welche größer ist als eine in der Stirnfläche des Gewindebolzens mündende Zentrierbohrung.

6. Spannvorrichtung nach einem der Ansprüche 1 bis 5, **dadurch gekennzeichnet, dass** die radiale Erweiterung (25) einstückiger Bestandteil des Stifts (20) ist.

7. Spannvorrichtung nach einem der vorangehenden Ansprüche, **dadurch gekennzeichnet, dass** die Erweiterung (25), gegenüberliegend zu der Stirnfläche des Gewindebolzens, mit einem sensorisch arbeitenden, mindestens ein an der Stirnfläche ausgebildetes Merkmal erfassenden Identifizierungselement (40) versehen ist.

8. Spannvorrichtung nach Anspruch 7, **dadurch gekennzeichnet, dass** ein Signalkabel (45) des Identifizierungselements (40) entlang der Längsführung (17) bis zu einem Anschluss (46) im oder am Zylinder (1) geführt ist, wobei der Anschluss (46) eine Signalverbindung zu einer Auswerteeinheit (47) herstellt.

9. Spannvorrichtung nach Anspruch 8, **dadurch gekennzeichnet, dass** das Signalkabel (45) in einem in dem Stift (20) ausgebildeten Längskanal (49) geführt ist.

10. Spannvorrichtung nach einem der vorangehenden Ansprüche, **gekennzeichnet durch** im Bereich des der Erweiterung (25) abgewandten anderen Endes (23) des Stifts (20) angeordnete Mittel (30) zum Erfassen der Längsposition des Stifts (20).

11. Spannvorrichtung nach einem der vorangehenden Ansprüche, **dadurch gekennzeichnet, dass** am anderen Ende (23) des Stifts (20) außerhalb des Zylinders (1) innerhalb oder außerhalb der Wechselbuchse (10) die axiale Vertikalbewegung des Stifts (20) induktiv oder mit optischen Mitteln ausgewertet und zur Anzeige gebracht wird.

## Claims

1. Tensioning device for extending a threaded bolt by pulling the threaded end portion (A) thereof, comprising a supporting tube (2) surrounding the threaded end portion (A), a cylinder (1) arranged in an extension of the supporting tube (2) with at least one piston (5) axially movable in the cylinder, an exchange bushing (10) which can be screwed to the threaded end portion (A) and can be carried along axially by the piston (5), and a pin (20) which can be axially supported against the end face (3A) of the end of the threaded bolt having the threaded end portion (A), **characterised in that** the pin (20) is arranged so as to be axially movable in a longitudinal guide (17) in the exchange bushing (10), **in that** the pin (20) can be axially supported with its pin end (22) against the end face (3A), and **in that** the pin (20) is radially widened at its pin end (22) by comparison with the rest of the pin cross-section.

2. Tensioning device according to claim 1, **characterised in that** the radially widened portion (25) is formed as a disc arranged fixedly or detachably on the pin end (22).

3. Tensioning device according to claim 2, **characterised in that** the disc (25) is provided with a flat or concavely curved underside facing the threaded bolt.

4. Tensioning device according to claim 1, **characterised in that** the radially widened portion is designed as a bushing which is provided with a cutout facing the threaded bolt.

5. Tensioning device according to one of claims 1 to 4, **characterised in that** the disc or bushing extends over an area which is greater than a centring bore which opens in the end face of the threaded bolt.

6. Tensioning device according to one of claims 1 to 5, **characterised in that** the radially widened portion (25) is an integral component of the pin (20).

7. Tensioning device according to one of the preceding claims, **characterised in that** the widened portion (25) is provided, opposite the end face of the threaded bolt, with an identification element (40) which operates as a sensor and senses at least one feature formed on the end face.

8. Tensioning device according to claim 7, **characterised in that** a signal cable (45) of the identification element (40) is guided along the longitudinal guide (17) as far as a connection (46) in or on the cylinder (1), wherein the connection (46) produces a signal connection to an evaluation unit (47).

9. Tensioning device according to claim 8, **characterised in that** the signal cable (45) is guided in a longitudinal channel (49) formed in the pin (20).

10. Tensioning device according to one of the preceding claims, **characterised by** means (30) for sensing the longitudinal position of the pin (20) which are arranged in the region of the other end (23) of the pin (20) remote from the widened portion (25).

11. Tensioning device according to one of the preceding claims, **characterised in that** at the other end (23) of the pin (20) outside the cylinder (1) and inside or outside the exchange bushing (10), the axial vertical movement of the pin (20) is evaluated inductively or by optical means and is displayed.

## Revendications

1. Dispositif de serrage pour l'étirage d'un boulon fileté par traction sur sa partie d'extrémité filetée (A), comportant un tube de support (2) entourant la partie d'extrémité filetée (A), un cylindre (1) disposé dans le prolongement du tube support (2) et comportant au moins un piston (5) mobile axialement dans celui-ci, une douille interchangeable (10) réalisée de manière à pouvoir être vissée sur la partie d'extrémité filetée (A) et à pouvoir être entraînée axialement par le piston (5), et une tige (20) qui peut être supportée axialement contre la face frontale (3A) de l'extrémité du boulon fileté qui présente la partie d'extrémité filetée (A), **caractérisé en ce que** la tige (20) est disposée de manière mobile axialement dans un guide longitudinal (17) disposé dans la douille interchangeable (10), **en ce que** la tige (20) peut être supportée axialement par son extrémité de tige (22) contre la face frontale (3A), et **en ce que** la tige (20) est réalisée de manière à s'élargir radialement à son extrémité de tige (22) par rapport à la partie restante de la tige.

2. Dispositif de serrage selon la revendication 1, **caractérisé en ce que** l'élargissement radial (25) est réalisé sous la forme d'un disque disposé de manière fixe ou amovible à l'extrémité de tige (22).

3. Dispositif de serrage selon la revendication 2, **caractérisé en ce que** le disque (25) est muni d'une face inférieure plate ou creuse incurvée vers le boulon fileté.

4. Dispositif de serrage selon la revendication 1, **caractérisé en ce que** le prolongement radial (25) est réalisé sous la forme d'une douille munie d'un évidement réalisé vers le boulon fileté.

5. Dispositif de serrage selon l'une des revendications 1 à 4, **caractérisé en ce que** le disque ou la douille s'étend sur une surface qui est plus grande qu'un alésage de centrage débouchant dans la face frontale du boulon fileté.

6. Dispositif de serrage selon l'une des revendications 1 à 5, **caractérisé en ce que** le prolongement radial (25) fait partie intégrante de la tige (20).

7. Dispositif de serrage selon l'une des revendications précédentes, **caractérisé en ce que** le prolongement (25) est muni, en position opposée à la face frontale du boulon fileté, d'un élément d'identification (40) qui agit par capteur et détecte au moins un élément caractéristique réalisé sur la face frontale.

8. Dispositif de serrage selon la revendication 7, **caractérisé en ce qu'**un câble de signal (45) de l'élément d'identification (40) est guidé le long du guide longitudinal (17) jusqu'à une borne (46) située dans ou sur le cylindre (1), dans lequel la borne (46) établit une connexion de signal à une unité d'évaluation (47).

9. Dispositif de serrage selon la revendication 8, **caractérisé en ce que** le câble de signal (45) est guidé dans un canal longitudinal (49) réalisé dans la tige (20) .

10. Dispositif de serrage selon l'une des revendications précédentes, **caractérisé par** des moyens (30) disposés dans la région de l'autre extrémité (23) de la tige (20), qui est tournée à l'opposé du prolongement (25), pour détecter la position longitudinale de la tige (20).

11. Dispositif de serrage selon l'une des revendications précédentes, **caractérisé en ce qu'**à l'autre extrémité (23) de la tige (20), à l'extérieur du cylindre (1) et à l'intérieur ou à l'extérieur de la douille interchangeable (10), le mouvement vertical axial de la tige (20) est évalué par induction ou à l'aide de moyens optiques et est affiché.
